# EUROPEAN PATENT SPECIFICATION

(11) **EP 2 643 870 B1**
(45) Date of publication and mention of the grant of the patent: **13.07.2016**
(21) Application number: 11796639.0
(22) Date of filing: 21.11.2011
(51) Int. Cl.: H01M 10/60

(54) **IMPROVED HEAT EXCHANGER MODULE FOR ELECTROCHEMICAL ACCUMULATORS**
VERBESSERTES WÄRMETAUSCHERMODUL FÜR ELEKTROCHEMISCHE AKKUMULATOREN
MODULE D'ÉCHANGEUR DE CHALEUR AMÉLIORÉ POUR ACCUMULATEURS ÉLECTROCHIMIQUES

(30) Priority: 22.11.2010 EP 10192047; 25.07.2011 TR 201107319
(43) Date of publication of application: 02.10.2013
(73) Proprietor: Altinay Havacilik ve Ileri Tenolojiler A.S., Pendik Istanbul (TR)
(72) Inventor: TOSUNOGLU, Selman, 34957 Istanbul (TR)
(74) Representative: Sevinç, Erkan
(86) International application number: PCT/EP2011/070568
(87) International publication number: WO 2012/069417

(56) References cited:
- EP-A1- 2 144 323
- DE-A1- 19 528 116
- DE-A1-102008 034 874
- US-A1- 2004 069 620
- US-A1- 2009 214 940

## Description

### Technical field of the invention

The present invention relates to an improved heat exchanger module for accommodating a plurality of electrochemical energy accumulators and regulating heat exchange of individual accumulators for providing a better performance of the same during operation. The plurality of electrochemical accumulators mostly include nickel metal hydride batteries or lithium ion batteries usually for the purpose of providing energy need of a battery operated device, in particular a battery operated vehicle.

### Description of the prior art

It is well known in the prior art that performance of modern electrochemical batteries are highly dependent to their operating temperature. In case that the surrounding temperature of a battery cell is considerably different than this optimum operating temperature, the battery would function with a lower performance. Even if the surrounding temperature is somehow at the optimum operating temperature of a battery, one may expect that the battery would normally heat up during operation due to the electric current flowing through its body. Hence, the temperature of a battery or a group of batteries contained in a module shall be regulated in real time for better performance during operation.

It is also evident that a battery must service properly under extreme atmospheric conditions, like frozen states at polar conditions or very high temperatures, e.g. during summer daytime around the equator line. Therefore, regulation of temperature of a battery group must be sufficient and efficient enough to compensate not only for the operational changes of battery cells, but also for the changes in the atmospheric conditions.

Various air propelled systems have been proposed so far for heat exchanging batteries contained in a battery container module. However, these have been found to be incapable of evenly heat exchanging a battery container module since the air could touch only the batteries contained in the outer parts of the module and was therefore unable to cool or heat effectively the batteries contained in the inner part of a container module. This results in considerable differences in the operating temperatures of individual battery cells contained in the same module. When the efficiency of an air propelled heat exchanger system is to be increased, then manufacturers needs to sacrifice compact systems of low volume and have to propose large size battery container modules due to the need of separating batteries apart from each other for maintaining a better convectional heat exchange.

A more recent system for maintaining heat exchange in a battery container module works based on the principle of maintaining conductional heat exchange among a stack of batteries contained in the module. This structure, however, results in unbalanced isothermal conditions, impeding the performance of batteries contained in each stack.

More recently, a new heat exchanger system has been disclosed in US 2009/0301700 A1. According to what has been disclosed, heat exchanger channels and an intended profile are incorporated into material strips by deep drawing. A forward-flow distribution aperture is incorporated into a first such material strip from a first heat exchanger plate and return collecting apertures are incorporated into a second such material strip. The latter are aligned in such a manner that webs of the two heat exchanger plates border each other, and the heat exchanger channels form heat exchanger tubes. The two strips are undulated, i.e. having a wavy structure, for containing a larger number of batteries in a container module. However, it is thought that heat exchange channels are viable to blockage due to bending of the channels at undulation peaks. Even if full blockage of the channels can be eliminated, it is highly possible that bending would result in shrinking of channel's cross section at peak points of undulation and therefore an unnecessary static resistance is formed against the flow of a heat exchange fluid inside the channels. An equally important drawback of what is disclosed is the need for collecting heat exchange fluid from both ends of the strip material at multiple points. Needless to mention, the more number of collection points is the higher risk of leakage of the heat exchange fluid. The system appears to be viable to fluid leakage under pressurized conditions. Keeping this in mind, the present invention proposes a system where there is only one fluid inlet and one fluid outlet for a heat exchange module.

### Summary of the invention

A heat exchanger module for accommodating and exchanging heat of a plurality of battery cells is disclosed. The heat exchanger module comprises a flow inlet, a flow outlet and at least two lamination packs in fluid communication with said flow inlet and flow outlet. The lamination pack according to the present invention comprises a first plate, a second plate, and a central plate having cutouts forming flow channels when said central plate is located in between said first and second plates. In a preferred embodiment the first, second and central plates of the lamination pack are undulated to have a wavy cross section in order to accommodate as many battery cells as possible in a fixed volume.

### Objects of the present invention

Primary object of the present invention is to provide a heat exchanger module for containing a plurality of battery cells, said heat exchanger module eliminating the drawbacks outlined in the background of the invention above.

A further object of the present invention is to provide a heat exchanger module capable of maintaining even isothermal conditions inside the battery container.

A further object of the present invention is to provide a heat exchanger module which has one fluid inlet and one fluid outlet for reducing the risk of fluid leakage in the exchanger module.

Another object of the present invention is to provide a compact heat exchanger module which requires a reduced amount of heat exchange fluid.

Still another object of the present invention is to provide a heat exchanger module which helps the battery group provide a longer service life by way of maintaining balanced isothermal conditions inside the battery container.

US2004/069620 A1 discloses a heat exchanger structure for a plurality of electrochemical storage cells has at least one duct component through which thermal control medium flows. The duct component has two material strips which are arranged parallel to one another and between which a heat exchanger duct is formed. The material strips have shaped portions adapted to the storage cells. The heat exchanger structure is useable, for example, for a motor vehicle battery.

DE 195 28 116 A2 discloses a heat transfer device with a plate sandwich structure includes at least two flow-duct-covering plates and one flow duct plate unit arranged in between which is formed of one or more superimposed flow duct plates each provided with flow duct breakthroughs. By means of the flow duct breakthroughs in one flow duct plate or by suitably overlapping flow duct breakthroughs of several adjoining flow duct plates, one or more flow paths are formed which extend predominantly in parallel to the plate plane between an inflow point and an outflow point.

Yet another object of the present invention is to provide a low volume, light weight and extremely efficient heat exchanger module.

### Brief description of the drawings

Accompanying drawings are given in simplified form solely for the purpose of exemplifying the present invention and cannot be considering as limiting the scope of protection defined in the appended claims.
Fig. 1 shows a perspective view of the heat exchanger module according to the present invention, where the heat exchanger is loaded with battery cells.
Fig. 2 shows a cross section of a lamination pack according to the present invention.
Fig. 3 shows an exploded view of a lamination pack according to the present invention.
Fig. 4 shows an upper view of the central plate of a lamination pack according to the present invention.
Fig. 5 shows a perspective view of a lamination pack and a close-up view of circle-A marked in the perspective.
Fig. 6 shows a cross sectional view of the lamination pack of the present invention.
Fig. 7 shows a side view of a heat exchanger module according to the present invention.
Fig. 8 shows the upper, side and front views of a lamination pack according to the present invention.
Fig. 9 shows upper view of an alternative embodiment of the central plate.
Fig. 10 shows upper view of an alternative embodiment of the central plate, where the central plate is equipped with peripheral chambers for enhanced heat exchange of the fluid.
Fig. 11 shows a perspective view a heat exchanger module with the collector shown on the top.
Fig. 12 shows a perspective view a heat exchanger module with the exploded view of the collector and a lamination pack.

### Detailed description of the invention

Hereinafter, preferred embodiments of the present invention will be described in detail with reference to the accompanying drawings which are given solely for the purpose of exemplifying embodiments according to the present invention.

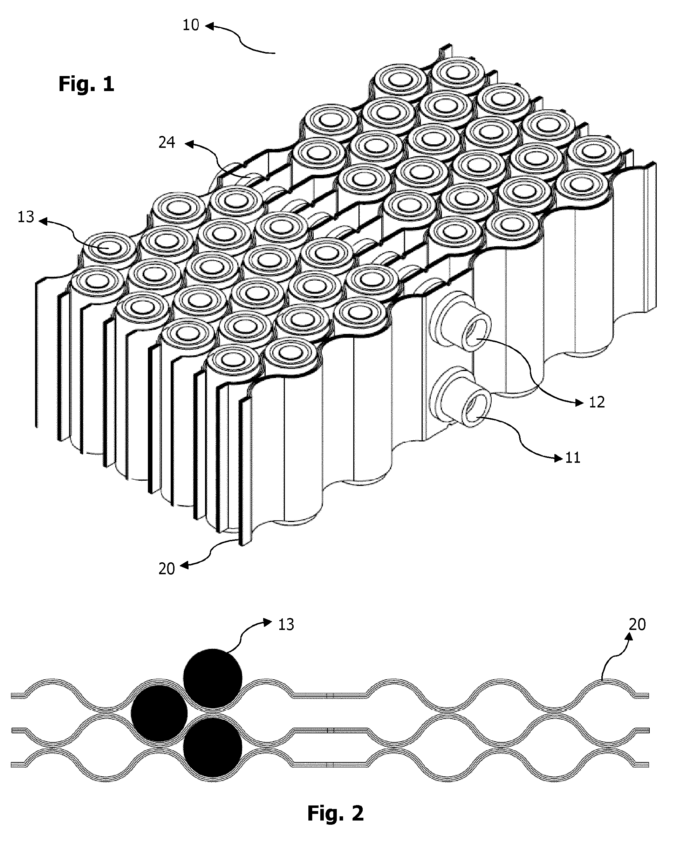

A heat exchanger module (10) loaded with a plurality of battery cells (13) is illustrated as a perspective view in Fig. 1. The heat exchanger module (10) is designed to contain as many battery cells (13) as possible in a fixed volume. This goal is achieved by undulating the lamination packs (20) and thereby containing a battery cell in each wavy section of the undulated lamination packs (20). While this wavy form of the lamination packs allow very compact battery containers and is therefore preferable, undulation of the lamination packs is not an essential part of the invention. Alternatively, lamination packs may be made in various different geometries for accommodating battery cells of different shapes. Each lamination pack (20) functions as an individual heat exchanger and is effective in heat exchanging in each and every battery cell (13) surrounded by said lamination pack as illustrated in the cross sectional view of a lamination pack in Fig. 2.

Referring back to Fig. 1, heat exchanger module (10) has a flow inlet (11) and a flow outlet (12) for circulating a heat exchange fluid inside the lamination packs (20) of the heat exchanger module (10). The heat exchange fluid may be water or any other liquid that has convenient heat exchange properties. It is preferable that the heat exchange fluid has a sufficiently low freezing point and a sufficiently high evaporation point depending on the atmospheric conditions where device charged by the battery container is intended for use. Typically, the heat exchange fluid is supplied into the heat exchanger module (10) through a pump and circulated inside the heat exchanger module and then cooled or heated depending on the circumstances in an outside heat exchanger for re-circulation into the heat exchanger module (10) of the present invention.

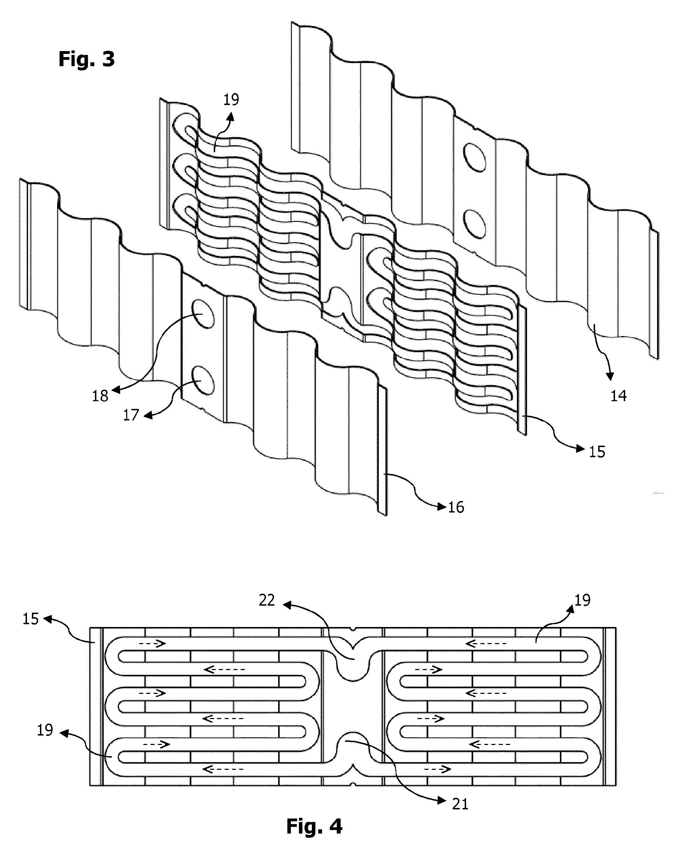

An exploded view of a lamination pack (20) according to the present invention is shown in Fig. 3. The lamination pack comprises a first plate (14), a second plate (16) and a central plate (15) in between said first and second plates (14,16). The shape of the central plate (15) is substantially similar to that of the first and second plates (14,16) except for the fact that the central plate (15) has channels (19) through which the heat exchange fluid flows. The channels are typically formed by cutting and removing sheet metal from the central plate (15) such that the parts cut out of the central plate (15) naturally form the channels (19) when the central plate (15) is located in between the first and second plates (14,16). Punching a metal sheet so as to form blank areas corresponding to the channels in the central plate (15) is considered to an inexpensive way of forming the central plate (15).

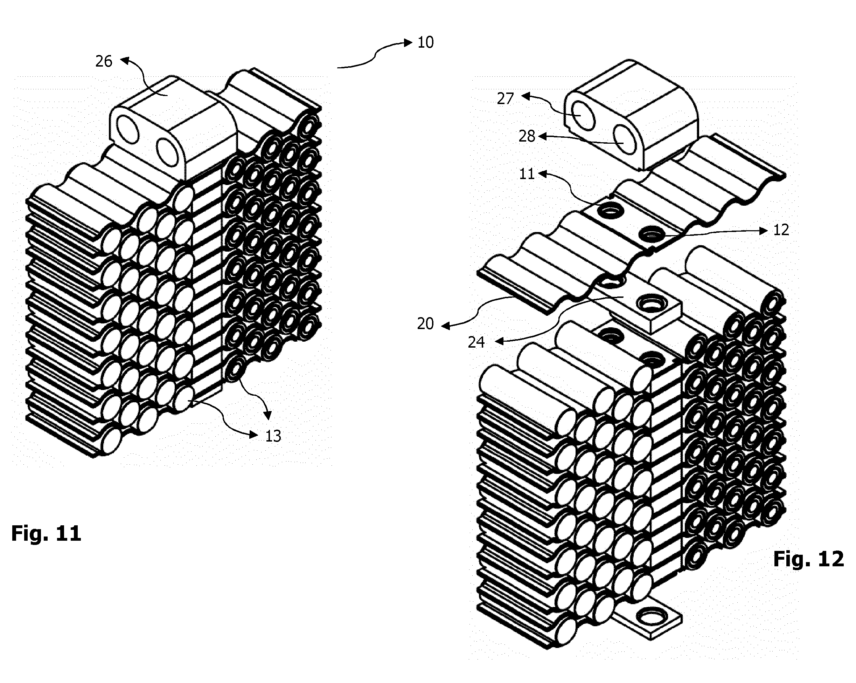

The upper view of the central plate (15) of a lamination pack (20) is illustrated in Fig. 4. An alternative embodiment to the central plate is illustrated in Fig. 11. The central plate has an inflow aperture (21) and an outflow aperture (22) respectively corresponding to the inflow bore (17) and the outflow bore (18) of the first and the second plates (14,16). Once the heat exchange fluid enters into the exchanger module (10) from the flow inlet (11), it is distributed to each lamination pack after flowing through the inflow bore (17) of the first plate (14) and then arriving into inflow aperture (21) of the central plate (15). The fluid arriving in the inflow aperture (21) then splits into two parts as illustrated in Fig. 4 and then flows through the channels (19) formed on the central plate (15) and exchanges heat. After having completed its way in the channels (19) the fluid arrives in the outflow aperture (22) and leaves the lamination pack (20) after passing through outflow bore (18) formed on the second plate (16). While the embodiment shown in Fig. 4 shows that the heat exchange fluid splits into two parts in the lamination pack, it is obvious for those skilled in the art that the flow may split into more branches or would not split at all without departing from the spirit of the present invention.

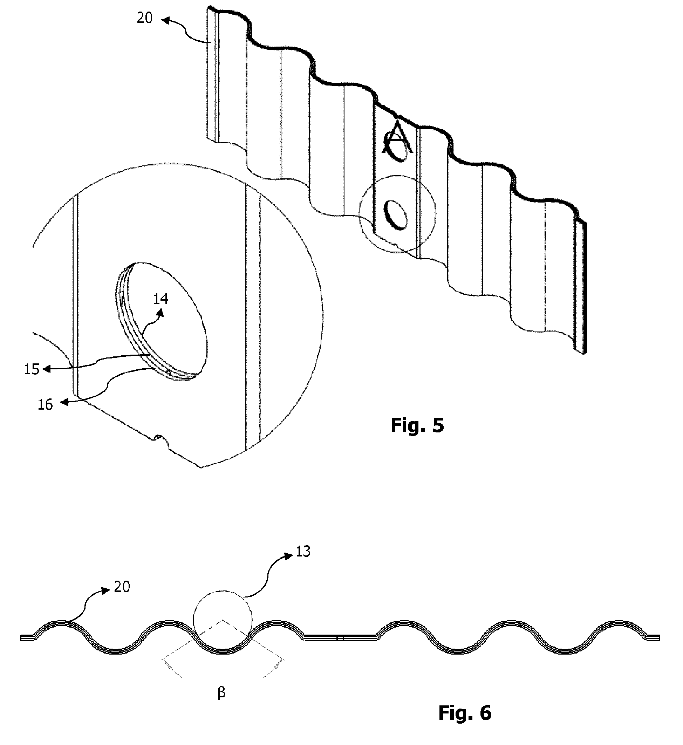

A lamination pack (20) is formed by locating the central plate (15) in between the first and second plates (14,16). Perspective view of a lamination pack is shown in Fig. 5 along with a close-up view of circle-A marked in the perspective view. Once the three plates (14,15,16) are joined together the close-up view of an inflow bore (17) or an outflow bore (18) is as shown on the left part of Fig. 5. Inflow bores (17) and an outflow bores (18) of the first and the second plates (14,16) perfectly match the inflow aperture (21) and the outflow aperture (22) of the central plate. These apertures and bores are perfectly sealed with each other in order to avoid leakage of the heat exchange fluid inside the heat exchange module. While many materials may be used in the manufacture of the plates (14,15,16), aluminum is preferable due to its high heat transfer coefficient, low weight and very good anti-corrosion properties. The plates may be joined to each other with various techniques such as adhesive binding, riveting, soldering, welding, TIG, MIG, MAG or furnace welding etc.

A cross sectional view of the lamination pack (20) according to the present invention is illustrated in Fig. 6. While undulation of the plates (14,15,16) is preferable for heat exchanging cylindrical shaped battery cells (13), it might not be preferable with flat shaped batteries. Bearing in mind that most of the existing electrochemical battery cells are cylindrical in shape, the embodiment shown in Fig. 6 has been proposed with differing encompassing angles (β). The encompassing angle (β) as illustrated in Fig. 6 typically resembles how much of the periphery of a cylindrical battery cell (13) is encompassed or enveloped by the undulated lamination pack (20). The encompassing angle (β) might be increased or decreased to separate the battery cells (13) apart from each other or to make them closer to each other depending on the needs. Compactness may be sacrificed to have more heat exchange capacity for more demanding needs such as when feeding electric motors of a vehicle, such as a battery operated automobile, bus, truck or sea vehicle.

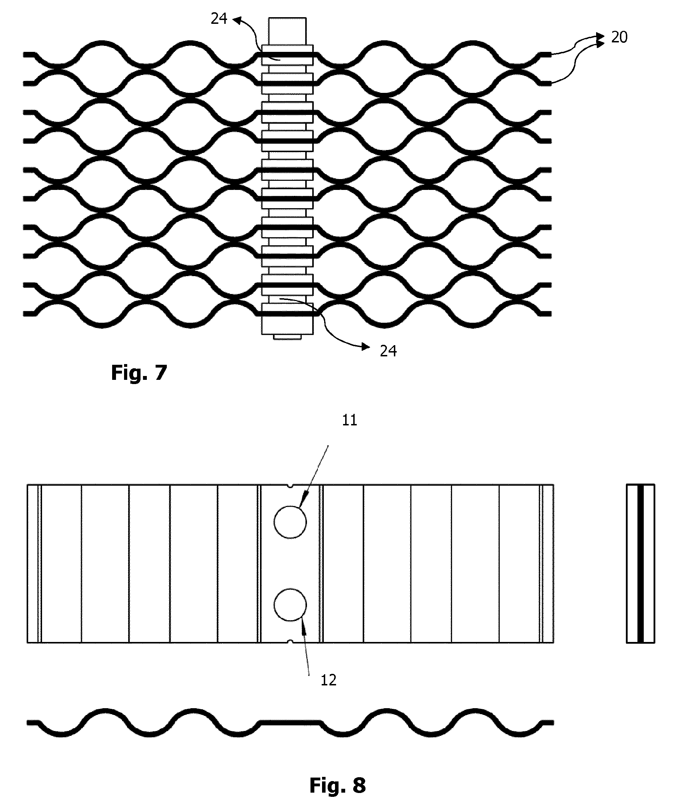

The encompassing angle (β) in Fig. 6 is approximately 110°, i.e. covering almost 30% of the entire periphery of a cylindrical battery cell (13). As apparent from Fig. 7, battery cell (13) is in fact encompassed by two different lamination packs (20). Hence, it may be assumed that a total of approximately 60% of the entire periphery of a battery cell (13) is encompassed by two different lamination packs (20). The rate of 60% encompassing is found to be highest rate in terms of the area encompassed divided by the total volume of a cell. Hence, from an optimization aspect the encompassing angle (β) is preferably around 110°.

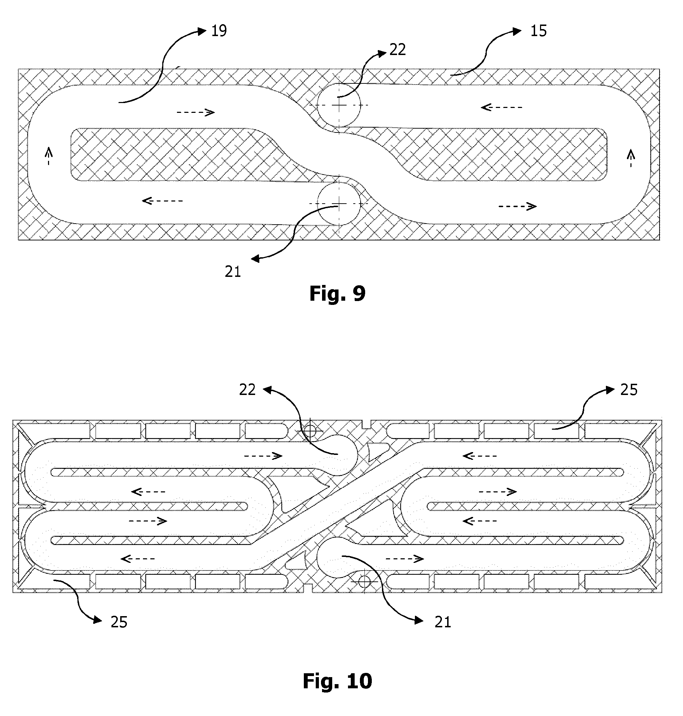

Power output of a heat exchanger module as shown in Fig. 9 or 10 may depend on a number of factors. While the flow rate of the heat exchange fluid is one of the primary factors in terms of the power output, another parameter the thickness of the central plate (15) which directly determines the cross sectional area of the channels (19) of formed on the same. Therefore, even if the flow rate is kept constant heat exchanger modules having different power output capacities may be obtained by using central plates (15) of different thickness. Apparently, the flow channels (19) may be made wider or narrower to change the instant flow rate of the exchange fluid during the course of flow in a lamination pack (20). In another embodiment, flow channels may be cut to have totally different roadmap along the central plate (15) or the total length of the channels might be increased or decreased for changing the output capacity of the heat exchanger module (10).

The fact that the channels are formed by the blank parts cut out on the central plate (15) is particularly important as the presence of the central plate in the mid part of a lamination pack (20) guarantees that the channels are not blocked or otherwise shrunk (due to solid thickness of the plate) at points where the lamination pack is bent to have undulations. Hence, it may be assumed that the flow channels (19) in a lamination pack (20) have constant cross section and free of unnecessary static resistances or shrinks against flow of the heat exchange fluid.

Reverting back to how a heat exchanger module is manufactured, it must be noted that flow inlets (11) and flow outlets (12) of each and every lamination pack substantially coincides with each other, such that when a plurality of lamination packs are stacked on each other, two tubes are formed within the exchanger module (10). One of these tubes serve as the fluid inlet and is connected to the collector inlet (27). The other tube is likewise connected to the collector outlet (28) for circulation of the heat exchange fluid. Spacers (24) may be used in between two lamination stacks in order to improve seal in between lamination packs (20). In such case, spacers (24) shall be shaped to establish fluid communication among neighboring lamination packs.

While spacers may be shaped and dimensioned to have tight fit with the lamination packs, sealants or welding may be used in order to eliminate the risk of fluid leakage.

The collector inlet (27) and collector outlet (28) are found on the collector unit (26) as shown in Figs. 11 and 12. This design of the fluid collector is found to be highly preferable since the heat exchange fluid is fed to the module (10) from a single location and then circulated inside the module, finally being extracted from one single point on the collector (26). This simple structure is particularly effective for avoiding fluid leakage in or around the exchanger module. Recalling the exchanger as proposed in US 2009/0301700, one may easily appreciate that fluid is collected at both ends of the stripes at a plurality of points where each of these is viable to leakage under pressure.

Referring to Fig. 10 where an alternate embodiment of the central plate (15) is shown, the central plate (15) is equipped with peripheral cutouts (25) for enhancing heat exchange. Since these cutouts (25) are formed by cutting material from the central plate, the total weight of a lamination pack (20) is reduced. This results in a lighter product whereas the vacancies in the peripheral chambers additionally help in an increased heat flow in and out of the central plate as heat can better flow in the absence of the metal cut out of the central plate (15) for forming the chambers around its periphery.

The first, second and central plates (14,16 and 15) of heat exchanger module (10) according to the present invention may be made of a corrosion resistant material, such as an aluminum alloy.

## Claims

1. A heat exchanger module (10) for accommodating and exchanging heat of a plurality of battery cells (13) during operation, wherein
the heat exchanger module (10) is made up by stacking a plurality of lamination packs (20) on top of each other,
each lamination pack has a first plate (14), a second plate (16), and a central plate (15) having cutouts forming flow channels (19) when said central plate (15) is located in between said first and second plates (14,16),
each lamination pack (20) has a flow inlet (11) and a flow outlet (12) aligning respectively with the flow inlets and outlets of a neighboring lamination pack (20) such that a single inlet tube and a single outlet tube is formed for establishing fluid communication among said laminations packs,
**characterized in that**
the central plates (15) of the lamination packs (20) comprise a plurality of cutouts (25) distributed around their periphery and isolated from said flow channels for enhancing heat flow around said lamination packs.

2. A heat exchanger module (10) as set forth in Claim 1 wherein said first, second and central plates (14,16 and 15) are undulated to have a wavy cross section.

3. A heat exchanger module (10) as set forth in Claim 2 wherein undulation results in each peak of a undulated lamination pack (20) encompassing in between 10% and 60% of the periphery of a cylindrically shaped battery cell (13) accommodated in that undulation.

4. A heat exchanger module (10) as set forth in Claim 2 wherein undulation results in an encompassing angle (β) of around 110° around the periphery of a cylindrically shaped battery cell (13).

5. A heat exchanger module (10) as set forth in Claim 1 wherein said first, second and central plates (14,16 and 15) are made of an aluminum alloy.

6. A heat exchanger module (10) as set forth in Claim 1 wherein said first, second and central plates (14,16 and 15) are joined to each other by either an adhesive, a rivet, soldering or welding.

7. A heat exchanger module (10) as set forth in Claim 1 wherein said module comprises one or more spacers (24) in between neighboring lamination packs (20).

8. A heat exchanger module (10) as set forth in Claim 1 wherein said module comprises a collector (26) having a collector inlet (27) and a collector outlet (28).

9. A battery operated vehicle comprising the heat exchanger module (10) of any of the preceding Claims.

## Patentansprüche

1. Wärmetauschermodul (10) zum Aufnehmen und Austauschen von Wärme einer Mehrzahl von Batteriezellen (13) während des Betriebs, wobei
das Wärmetauschermodul (10) durch Übereinanderstapeln einer Mehrzahl von Schichtenstapeln (20) gebildet ist,
jeder Schichtenstapel eine erste Platte (14), eine zweite Platte (16) und eine zentrale Platte (15) mit Aussparungen, die Strömungskanäle (19) bilden, wenn sich die mittlere Platte (15) zwischen der ersten und der zweiten Platte (14, 16) befindet, aufweist,
jeder Schichtenstapel (20) einen Strömungseinlass (11) und einen Strömungsauslass (12) aufweist, die jeweils an die Strömungseinlässe und -auslässe eines benachbarten Schichtenstapels (20) so angepasst sind, dass ein einziges Einlassrohr und ein einziges Auslassrohr zur Herstellung von Fluidkommunikation zwischen den Schichtenstapeln ausgebildet wird,
**dadurch gekennzeichnet, dass**
die zentralen Platten (15) der Schichtenstapel (20) eine Mehrzahl von Aussparungen (25), verteilt um ihren Umfang und isoliert von den Strömungskanälen, zur Verbesserung des Wärmeflusses um die Schichtenstapel herum umfassen.

2. Wärmetauschermodul (10) nach Anspruch 1, wobei die erste, zweite und zentrale Platte (14, 16 und 15) gewellt sind, um einen wellenförmigen Querschnitt aufzuweisen.

3. Wärmetauschermodul (10) nach Anspruch 2, wobei die Wellenform jeweils zu einem Scheitelpunkt eines gewellten Schichtenstapels (20), umfassend zwischen 10 % und 60 % des Umfangs einer in dieser Wellenform untergebrachten zylindrisch geformten Batteriezelle (13), führt.

4. Wärmetauschermodul (10) nach Anspruch 2, wobei die Wellenform zu einem umspannenden Winkel (β) von etwa 110° um den Umfang einer zylindrisch geformten Batteriezelle (13) führt.

5. Wärmetauschermodul (10) nach Anspruch 1, wobei die erste, zweite und zentrale Platte (14, 16 und 15) aus einer Aluminiumlegierung hergestellt sind.

6. Wärmetauschermodul (10) nach Anspruch 1, wobei die erste, zweite und zentrale Platte (14, 16 und 15) entweder durch einen Klebstoff, einen Niet, Löten oder Schweißen miteinander verbunden sind.

7. Wärmetauschermodul (10) nach Anspruch 1, wobei das Modul ein oder mehrere Abstandshalter (24) zwischen benachbarten Schichtenstapeln (20) umfasst.

8. Wärmetauschermodul (10) nach Anspruch 1, wobei das Modul einen Sammler (26) mit einem Sammlereinlass (27) und einem Sammlerauslass (28) umfasst.

9. Batteriebetriebenes Fahrzeug, umfassend das Wärmetauschermodul (10) nach einem der vorangehenden Ansprüche.

## Revendications

1. Module d'échangeur de chaleur (10) pour recevoir et échanger de la chaleur d'une pluralité d'éléments de batterie (13) en cours de fonctionnement,
le module d'échangeur de chaleur (10) étant constitué par empilage d'une pluralité d'ensembles de stratification (20) l'un au-dessus de l'autre,
chaque ensemble de stratification présentant une première plaque (14), une seconde plaque (16) et une plaque centrale (15) ayant des entailles formant des canaux d'écoulement (19) lorsque ladite plaque centrale (15) est disposée entre lesdites première et seconde plaques (14, 16),
chaque ensemble de stratification (20) présentant une entrée d'écoulement (11) et une sortie d'écoulement (12) alignées respectivement avec les entrées et sorties d'écoulement d'un ensemble de stratification (20) voisin, de façon qu'un tube d'entrée unique et un tube de sortie unique soient formés pour établir une communication fluidique entre les ensembles de stratification,
**caractérisé en ce que**
les plaques centrales (15) des ensembles de stratification (20) comprennent une pluralité d'entailles (25) réparties autour leurs périphéries et isolées par rapport auxdits canaux d'écoulement pour améliorer la circulation de chaleur autour desdits ensembles de stratification.

2. Module d'échangeur de chaleur (10) suivant la revendication 1, ladite première plaque, ladite seconde plaque et ladite plaque centrale (14, 16 et 15) sont ondulées de façon à avoir une section transversale ondulée.

3. Module d'échangeur de chaleur (10) suivant la revendication 2, l'ondulation a pour résultat que chaque sommet d'ondulation d'un ensemble de stratification ondulé (20) embrasse entre 10% et 60% de la périphérie d'un élément de batterie de forme cylindrique (13) reçu dans cette ondulation.

4. Module d'échangeur de chaleur (10) suivant la revendication 2, l'ondulation résultant en un angle (β) embrassant 110° environ de toute la périphérie d'un élément de batterie de forme cylindrique (13).

5. Module d'échangeur de chaleur (10) suivant la revendication 1, ladite première plaque, ladite seconde plaque et ladite plaque centrale (14, 16 et 15) étant fabriquées en alliage d'aluminium.

6. Module d'échangeur de chaleur (10) suivant la revendication 1, ladite première plaque et ladite seconde plaque et ladite plaque centrale (14, 16 et 15) étant liées entre elles soit par un adhésif, soit par un rivet, soit par brasage, soit par soudage.

7. Module d'échangeur de chaleur (10) suivant la revendication 1, ledit module comprenant un ou plusieurs écarteurs (24) entre des ensembles de stratification (20) voisins.

8. Module d'échangeur de chaleur (10) suivant la revendication 1, ledit module comprenant un collecteur (26) ayant une entrée de collecteur (27) et une sortie de collecteur (28).

9. Véhicule alimenté par batterie comprenant le module d'échangeur de chaleur (10) suivant une quelconque des revendications précédentes.
